(19) Europäisches Patentamt

European Patent Office

Office européen des brevets

(11) **EP 0 983 521 B1**

(12) **FASCICULE DE BREVET EUROPEEN**

(45) Date de publication et mention
de la délivrance du brevet:
**30.11.2005  Bulletin 2005/48**

(51) Int Cl.⁷: **G01T 1/00**, G01T 5/08

(21) Numéro de dépôt: **98925730.8**

(86) Numéro de dépôt international:
**PCT/FR1998/000982**

(22) Date de dépôt: **15.05.1998**

(87) Numéro de publication internationale:
**WO 1998/053339 (26.11.1998 Gazette 1998/47)**

(54) **DETECTEUR D'IMAGE A L'ETAT SOLIDE SOUMIS A UN RAYONNEMENT IONISANT ET EQUIPE D'UN DISPOSITIF DE MESURE**

ABBILDENDER FESTKÖRPERDETEKTOR DER EINER IONISIERENDEN STRAHLUNG AUSGESTZT IST UND EIN MESSGERÄT AUFWEIST

SOLID STATE IMAGE SENSOR SUBJECTED TO AN IONISING RADIATION AND EQUIPPED WITH A DEVICE FOR MEASURING

(84) Etats contractants désignés:
**DE FR NL**

(30) Priorité: **23.05.1997  FR 9706331**

(43) Date de publication de la demande:
**08.03.2000  Bulletin 2000/10**

(73) Titulaire: **THALES ELECTRON DEVICES S.A.**
**92360 Meudon La Forêt (FR)**

(72) Inventeur: **MOY, Jean-Pierre**
**Thomson-CSF, Protection & Conseil**
**94117 Arcueil Cedex (FR)**

(74) Mandataire: **Guérin, Michel et al**
**Marks & Clerk France**
**31-33 Avenue Aristide Briand**
**94117 Arcueil Cédex (FR)**

(56) Documents cités:
**FR-A- 2 352 311     US-A- 4 739 168**
**US-A- 5 391 878**

**Description**

La présente invention concerne les détecteurs d'image à l'état solide et notamment les détecteurs d'image radiologique recevant un rayonnement X. L'invention trouve aussi son intérêt dans le domaine du contrôle non destructif où le rayonnement utilisé n'est pas toujours constitué par des rayons X mais par des rayons gamma par exemple. Par la suite le terme rayonnement ionisant est utilisé.

Lors de l'acquisition d'une image d'un corps, que ce soit un objet ou un patient, soumis à un rayonnement ionisant incident, un rayonnement X par exemple, par un détecteur d'image, il est habituel de mesurer la dose de rayonnement transmise par le corps au détecteur pendant l'exposition, afin de s'assurer que le détecteur travaille bien dans un domaine optimal de fonctionnement. Cette mesure permet éventuellement de contrôler la durée de l'exposition. La mesure ne doit pas évidemment perturber l'image du corps capté par le détecteur.

Dans le cas classique d'imagerie radiologique médicale, le détecteur d'image est formé d'un film radiologique. Un générateur de rayons X bombarde une partie d'un patient et les rayons X en émergeant de cette partie à examiner impressionnent le film radiologique auquel peut être accolé un écran fluorescent permettant l'observation de l'image.

Il est classique de placer dés chambres d'ionisation sur le trajet des rayons X entre le patient et le film pour analyser le rayonnement reçu par le film en plusieurs régions jugées typiques de l'image.

L'intensité du rayonnement X reçu par les chambres d'ionisation est intégrée sur plusieurs centimètres carrés pour donner une mesure moyenne de l'exposition dans ces régions. Cette mesure permet d'utiliser au mieux la dynamique du détecteur d'image et de couper la tension du générateur de rayons X lorsque la dose optimale est atteinte.

Ces chambres à ionisation absorbent très peu les rayons X et leur ombre n'est pas visible sur les détecteurs d'image classiques.

Il s'est aussi développé des détecteurs d'image sans film radiologique utilisant des tubes intensificateurs d'images radiologiques (IIR). Le rayonnement ionisant incident qui sort du corps à examiner pénètre dans le tube IIR où il est converti par un scintillateur en rayonnement de plus basse énergie, généralement de la lumière. Cette lumière est convertie ensuite en électrons par une photocathode. Les électrons viennent bombarder un écran luminescent sur lequel on peut observer une image visible qui est l'image convertie du rayonnement ionisant qui n'a pas été absorbé par le corps. Dans ce genre de dispositif, le contrôle de l'exposition se fait directement par mesure du courant de photocathode.

Les nouveaux détecteurs d'image qui sont en train de se développer sont des détecteurs à l'état solide formés d'une pluralité d'éléments sensibles généralement disposés en matrice.

Ces détecteurs à l'état solide sont réalisés par dépôt d'un film mince d'un matériau semi-conducteur, par exemple du silicium amorphe, sur un support isolant.

Si les éléments sensibles sont photosensibles, c'est-à-dire sensibles à un rayonnement visible ou proche du visible, on intercale un scintillateur entre le corps et le détecteur pour convertir le rayonnement ionisant incident qui a traversé le corps en rayonnement visible ou proche du visible. Les éléments photosensibles réagissent à ce rayonnement visible ou proche du visible.

Le scintillateur peut être en iodure de césium par exemple. Les éléments photosensibles effectuent alors une conversion photoélectrique du rayonnement qu'ils reçoivent en signaux électriques exploitables par des circuits électroniques appropriés.

Si les éléments sensibles sont sensibles à des charges, une couche radioconductrice est interposée entre le corps et le détecteur. Elle convertit le rayonnement ionisant incident en charges et les éléments sensibles du détecteur en recevant ces charges les convertissent en signaux électroniques exploitables par des circuits électroniques appropriés.

Ces détecteurs d'image à l'état solide sont très prometteurs car ils fournissent une image numérique. L'image peut être visualisée en temps réel, aisément stockée, récupérée, traitée, transmise sur un autre site....

Ces détecteurs d'image à l'état solide ouvrent la possibilité de visualiser des détails très peu contrastés qui n'étaient pas visibles sur les films radiologiques conventionnels. Les images obtenues sont beaucoup plus nettes et plus fines.

Avec ces détecteurs d'image à l'état solide, il n'est plus question d'utiliser des chambres d'ionisation car leur ombre se superpose à l'image et est maintenant visible et gênante.

Une autre solution proposée dans le brevet US 4 739 168 consiste à placer entre le patient et le détecteur d'image, un dispositif de mesure de l'exposition. Celui-ci comporte un écran intensificateur qui convertit en un signal optique les rayons X transmis par le patient, et un groupe de fibres optiques qui transmet le signal optique à un détecteur optique. Mais le dispositif de mesure perturbe l'image.

La présente invention propose donc un détecteur d'image à l'état solide formé d'éléments sensibles exposés à un rayonnement ionisant en provenance d'un corps à observer et équipé d'au moins un dispositif de mesure de l'exposition du détecteur d'image. Ce dispositif de mesure ne perturbe pas l'image.

Plus précisément l'invention est un détecteur d'image à l'état solide destiné à détecter l'image d'un corps, comportant une pluralité d'éléments sensibles, une première face exposée à un rayonnement ionisant incident représentatif de l'image, une deuxième face opposée à la première et laissant passer un rayonnement ionisant non absorbé. Le détecteur d'image est équipé d'au moins un dispositif de mesure de l'exposition du détecteur d'image placé à proximité de l'autre face du détecteur d'image et destiné à être exposé au rayonnement ionisant non absorbé. Le dispositif de mesure comporte un dispositif de détection apte à produire un signal représentatif de l'exposition du détecteur d'image et au moins une fibre optique apte à recevoir par sa face latérale un rayonnement, à effectuer une conversion en longueur d'onde du rayonnement reçu et à émettre un premier rayonnement visible ou proche du visible représentatif du rayonnement ionisant absorbé vers le dispositif de détection.

Selon une première configuration de l'invention, la fibre optique est scintillatrice et a sa surface latérale exposée au rayonnement ionisant non absorbé, elle convertit le rayonnement ionisant non absorbé en le rayonnement visible ou proche du visible émis vers le dispositif de détection.

Selon une autre configuration de l'invention, le détecteur d'image comporte un convertisseur du rayonnement ionisant non absorbé en un second rayonnement visible ou proche du visible. La fibre optique dont la surface latérale est exposée au second rayonnement visible ou proche du visible est fluorescente et convertit le second rayonnement visible ou proche du visible en le rayonnement visible ou proche du visible émis vers le dispositif de détection.

Dans un premier mode de réalisation simple, le convertisseur comporte au moins un écran scintillateur. L'écran scintillateur peut être placé entre le détecteur d'image et la fibre optique ou être à l'opposé du détecteur d'image par rapport à la fibre optique.

Dans un autre de mode de réalisation donnant une bonne efficacité de conversion à cause d'un meilleur couplage optique, le convertisseur peut comporter de la poudre agglomérée d'un matériau scintillateur qui gaine la fibre optique.

Dans un autre mode de réalisation ayant des performances sensiblement équivalentes, le convertisseur peut comporter un vernis chargé en matériau scintillateur enrobant la fibre optique.

Une seule des extrémités de la fibre optique peut être couplée au dispositif de détection et dans ce cas il est préférable que l'autre extrémité de la fibre optique soit réfléchissante.

Il est possible que les deux extrémités de la fibre optique soient couplées au dispositif de détection. Dans ce cas, le dispositif de détection peut comporter un seul détecteur fournissant le signal représentatif de l'exposition, ce détecteur étant éclairé par les deux extrémités de la fibre optique. Il peut aussi comporter deux détecteurs, chacun étant éclairé par une extrémité de la fibre optique et fournissant un signal, les deux signaux étant combinés pour donner le signal représentatif de l'exposition.

Lorsque le détecteur d'image à l'état solide est photosensible et comporte un système d'éclairage de remise à zéro, du côté de son autre face, le système d'éclairage peut être situé à l'opposé du détecteur d'image par rapport à la fibre optique scintillatrice ou bien entre la fibre optique scintillatrice et le détecteur d'image.

Lorsque le détecteur d'image à l'état solide est photosensible et comporte un système d'éclairage de remise à zéro, du côté de son autre face, le système d'éclairage est placé entre la fibre optique fluorescente et le détecteur d'image car la fibre optique est sensible à l'éclairage.

Il est préférable que la fibre optique suive un motif approprié de manière à occuper une surface significative face au détecteur d'image. Elle peut être enroulée en colimaçon ou en lacet.

Le principe de l'invention et de certains de ses modes de réalisation seront maintenant décrits de manière non limitative en regard des dessins annexés qui représentent :

- les figures 1a, 1b, 1c des exemples de réalisation d'un dispositif de mesure selon l'invention avec une fibre optique scintillatrice;
- les figures 2a, 2b, 2c, 2d des exemples de réalisation d'un dispositif de mesure selon l'invention avec une fibre optique fluorescente.

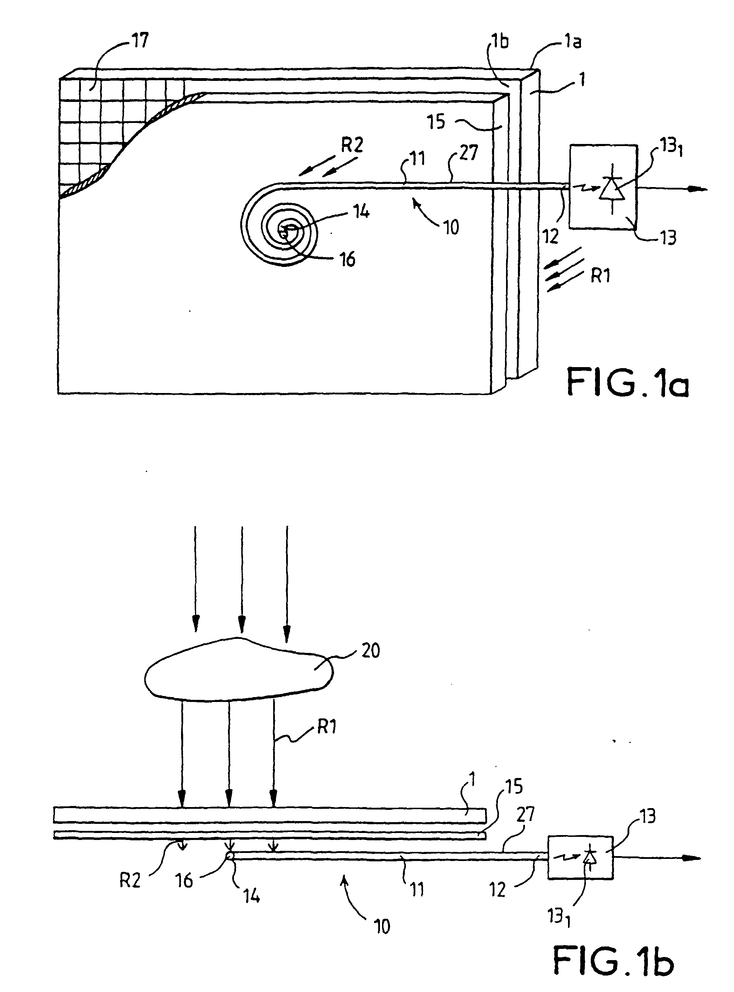

Les figures 1a, 1b montrent de face et en coupe transversale un exemple de dispositif de mesure 10 de l'exposition d'un détecteur d'image 1 à l'état solide. Ce détecteur d'image 1 est destiné à fournir une image d'un corps 20. Il reçoit par une première face 1a un rayonnement ionisant R1 incident en provenance du corps 20. Ce rayonnement ionisant R1 incident est représentatif de l'image.

Le détecteur d'image 1 à l'état solide est formé d'éléments sensibles 17. Ils peuvent être photosensibles et on les associe à un scintillateur non représenté ou être sensibles aux charges et on les associe à une couche radioconductrice. Les éléments sensibles 17 peuvent être arrangés en matrice ou en barrette par exemple.

Le dispositif 10 de mesure de l'exposition est destiné à être placé à proximité d'une seconde face 1b du détecteur d'image 1 opposée à la première 1 a. Il reçoit un rayonnement ionisant R2 en provenance du détecteur d'image 1 à l'état solide. Ce rayonnement ionisant R2 est une fraction du rayonnement ionisant R1 incident et correspond globalement à ce que le détecteur d'image 1 à l'état solide laisse sortir et n'absorbe pas. Le dispositif de mesure de l'exposition 10 comporte au moins une fibre optique 11 dont au moins l'une des extrémités 12 est couplée à un dispositif de détection 13.

La fibre optique 11 émet vers le dispositif de détection 13 un rayonnement visible ou proche du visible. Ce rayonnement visible ou proche du visible est représentatif du rayonnement ionisant R2 non absorbé. Le dispositif de détection 13, appelé par la suite dispositif de détection de lumière, produit un signal électrique représentatif de l'exposition du détecteur d'image 1 à l'état solide. Il comporte au moins un détecteur de lumière $13_1$, par exemple une photodiode. Un phototransistor ou un autre composant électronique approprié ferait l'affaire.

Selon une première configuration du dispositif de mesure de l'exposition selon l'invention, la fibre optique 11 utilisée est une fibre scintillatrice. Ce type de fibre optique possède un coeur avec des propriétés scintillatrices, c'est-à-dire qu'il transforme le rayonnement ionisant R2 non absorbé en rayonnement visible ou proche du visible. Le coeur de la fibre optique est dopé avec un matériau approprié tel que du terbium ou une autre terre rare lui donne cette propriété scintillatrice. L'exposition d'une telle fibre optique à un rayonnement ionisant produit une fluorescence lumineuse dans le coeur de la fibre optique. Une fraction de cette fluorescence, fonction de l'ouverture numérique de la fibre peut être collectée et émise vers le dispositif détecteur de lumière 13.

L'intensité du rayonnement ionisant R2 non absorbé par le détecteur d'image 1 est proportionnelle à l'intensité du rayonnement ionisant R1 reçu par le détecteur d'image 1. Ce rayonnement ionisant R2 non absorbé peut représenter selon les cas entre 5 et 50 % du rayonnement ionisant R1 reçu. Seules les énergies les plus élevées sont transmises.

Malgré la faible intensité du rayonnement ionisant R2 non absorbé reçu par la fibre optique 11, le rendement de fluorescence souvent médiocre, le petit diamètre de la fibre optique, une longueur de fibre optique inférieure à sa longueur utile, le dispositif de mesure permet quand même une mesure significative de l'exposition avec un dispositif de détection de lumière comportant, par exemple, une photodiode de petite taille. La longueur utile d'une fibre optique est la longueur maximale au-delà de laquelle la transmission décroît. La longueur utile d'une fibre optique scintillatrice est d'environ 2 mètres.

La fibre optique 11 est disposée de manière à recevoir le rayonnement ionisant R2 non absorbé par sa surface latérale 27.

Elle peut être enroulée en colimaçon ou suivre tout autre motif, un lacet par exemple, de manière à collecter le rayonnement ionisant R2 sur une surface appréciable. Elle est placée au niveau d'une zone du détecteur d'image 1 à l'état solide où l'on désire contrôler l'exposition. Le motif de la fibre tiendra compte du rayon de courbure minimum à lui imposer de manière à éviter la perturbation de ce qu'elle transmet. Un trop petit rayon de courbure réduit son ouverture numérique.

Dans le cas illustré aux figures 1a, 1b, une seule extrémité 12 de la fibre optique 11 est couplée au dispositif de détection de lumière 13. On aura intérêt à rendre l'autre extrémité 14 de la fibre optique 11 réfléchissante pour que le maximum de rayonnement visible ou proche du visible émerge par la première extrémité 12.

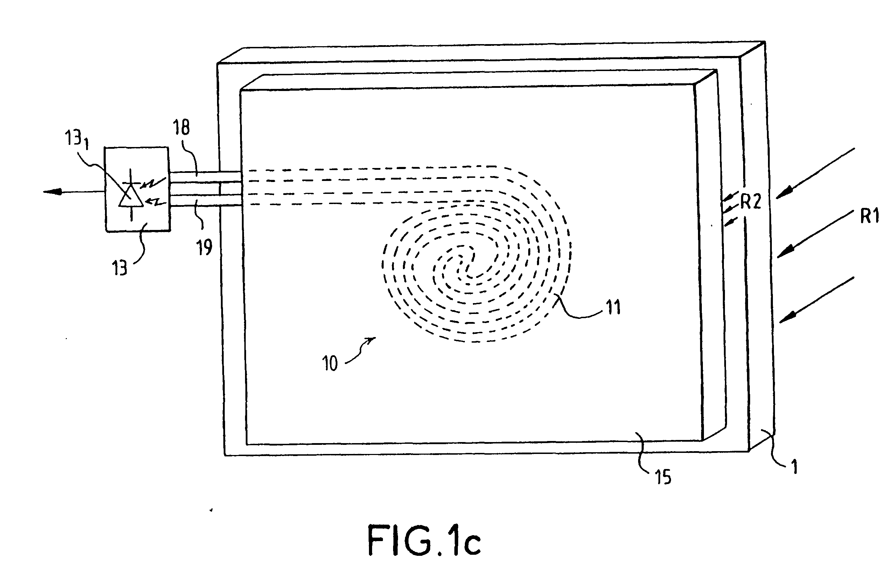

Une métallisation par exemple à base d'aluminium peut recouvrir la tranche de la fibre optique 11 au niveau de cette autre extrémité 14. Il est envisageable aussi d'y coller un miroir 16 comme l'illustrent les figures 1 a, 1 b.

Dans un autre mode de réalisation, il est possible que les deux extrémités 18, 19 de la fibre optique 11 soient couplées au dispositif de détection de lumière 13. C'est ce qu'illustre la figure 1c. Dans cette variante, le dispositif de détection de lumière 13 comporte un seul détecteur de lumière $13_1$ qui produit le signal électrique et qui est symbolisé par une photodiode. Les deux extrémités 18, 19 de la fibre optique 11 éclairent ce détecteur de lumière $13_1$ unique.

Les détecteurs d'image 1 à l'état solide, s'ils possèdent des éléments photosensibles nécessitent souvent pour leur remise à zéro, un système d'éclairage 15. Le système d'éclairage 15 éclaire la seconde face 1 b du détecteur d'image 1.

Une fibre optique 11 scintillatrice est peu sensible aux longueurs d'onde du spectre visible, elle peut être placée indifféremment entre le détecteur d'image 1 et le système d'éclairage 15 ou à l'opposé du détecteur d'image 1 par rapport au système d'éclairage 15 comme l'illustrent les figures 1a, 1b et 1c.

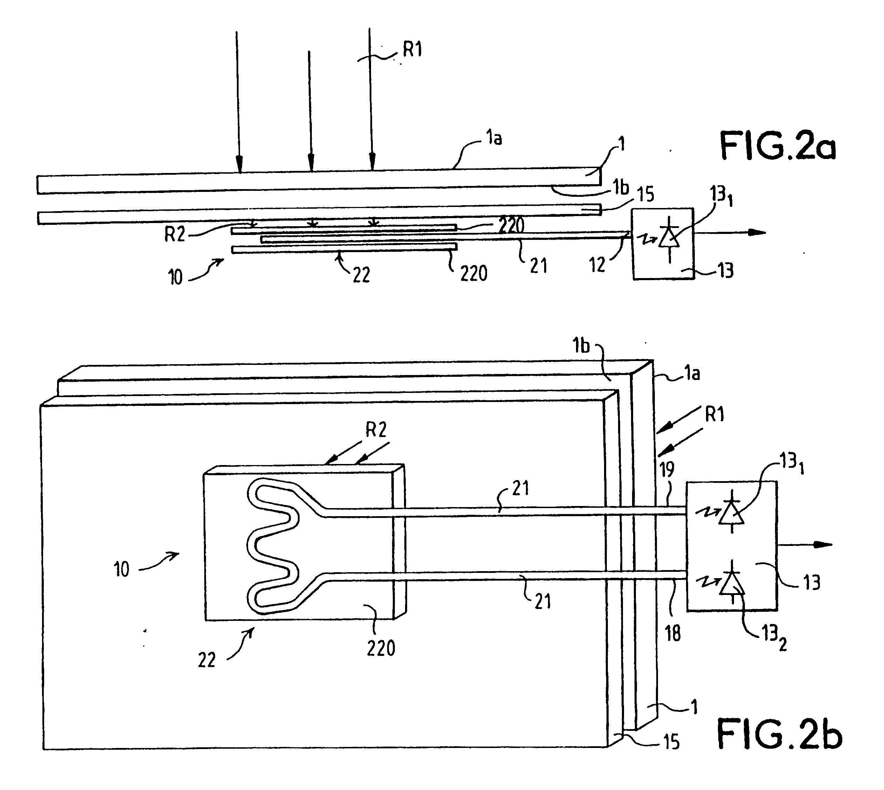

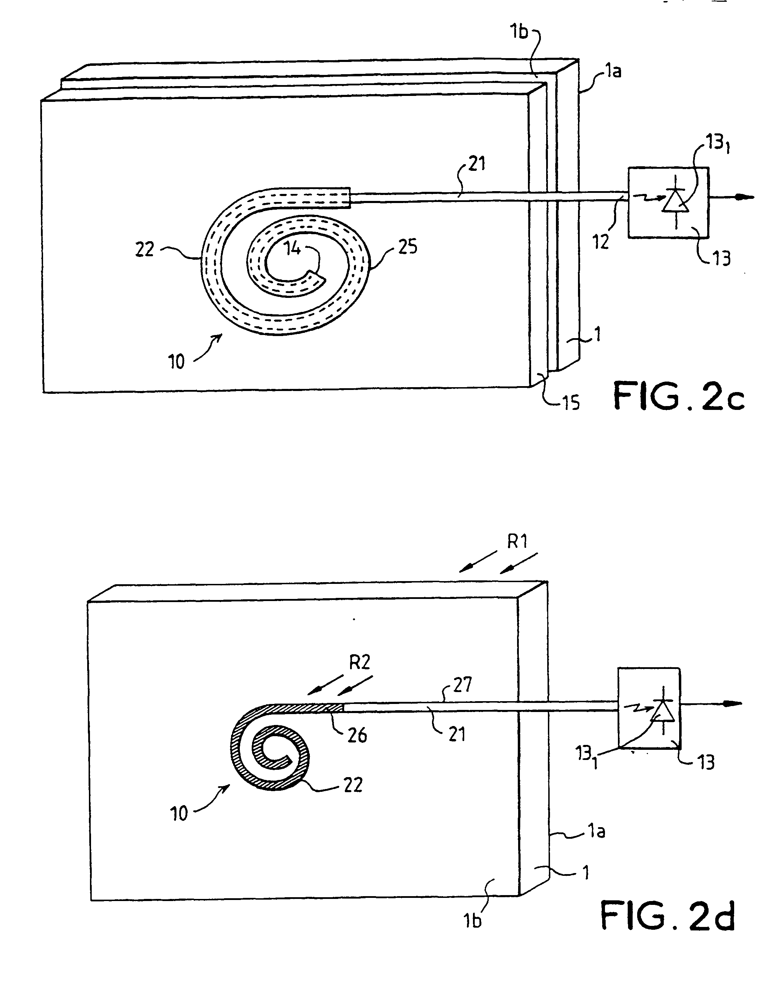

Au lieu de comporter une fibre optique scintillatrice au rayonnement ionisant R2 non absorbé, le dispositif de mesure d'exposition selon l'invention peut comporter une fibre optique 21 fluorescente associée à un convertisseur 22. C'est ce qu'illustrent les figures 2a, 2b, 2c, 2d.

Les fibres optiques fluorescentes ont leur coeur réalisé en polymère organique chargé d'un matériau fluorescent qui convertit un rayonnement visible ou proche du visible en un rayonnement visible ou proche du visible de longueur d'onde plus grande. Par exemple, on trouve dans le commerce des fibres optiques qui lorsqu'elles sont exposées à un rayonnement vert, bleu ou ultraviolet émettent une lumière rouge. La longueur d'onde du rouge est comprise entre 600 et 650 nm alors que celles du vert, du bleu ou de l'ultraviolet sont inférieures à 600 nm.

Dans cette configuration, le convertisseur 22 reçoit le rayonnement ionisant R2 non absorbé et le convertit en un rayonnement visible ou proche du visible à laquelle la fibre optique 21 est exposée et est sensible.

Comme dans le cas précédent, la fraction de la fluorescence contenue dans l'ouverture numérique de la fibre optique 21 est émise vers le dispositif de détection de lumière 13.

Le convertisseur 22 peut comporter au moins un écran 220 scintillateur. Sur l'exemple de la figure 2b, il n'y a qu'un seul écran 220 scintillateur placé entre la fibre optique 21 et le détecteur d'image 1 à l'état solide. Il aurait pu être placé à l'opposé du détecteur d'image 1 par rapport à la fibre optique.

On peut bien sûr envisager qu'il y ait plus d'un écran scintillateur pour augmenter la sensibilité du dispositif de mesure 10. La figure 2a montre le cas où il y en a deux, les deux écrans 220 scintillateurs sont placés de part et d'autre de la fibre optique 21. Plus de deux écrans sont utilisables en vue d'entourer au mieux la fibre optique.

On peut aussi envisager qu'au lieu d'utiliser, en tant que convertisseur, au moins un écran scintillateur, la fibre optique soit enrobée d'une gaine 25 en poudre agglomérée de matériau scintillateur comme l'illustre la figure 2c.

Une autre solution serait d'enduire la fibre optique d'un vernis 26 chargé en matériau scintillateur comme l'illustre la figure 2d.

Ces dernières variantes permettent d'améliorer l'efficacité de la conversion à cause d'un meilleur couplage optique.

Ces deux variantes où la fibre optique est recouverte peuvent être combinées avec au moins un écran scintillateur.

Dans la configuration avec fibre optique fluorescente et convertisseur, la fibre optique 21 et le convertisseur seront placés à l'opposé du détecteur d'image 1 par rapport au système d'éclairage 15 si ce dernier existe car une fibre optique fluorescente est sensible à l'éclairement.

Au lieu de ramener les deux extrémités de la fibre optique 21 vers le même détecteur de lumière $13_1$, il est possible que le dispositif de détection de lumière 13 comporte deux détecteurs de lumière $13_1$, $13_2$ chacun étant éclairé par l'une des extrémités 18, 19 de la fibre optique 21. Les signaux fournis par les deux détecteurs de lumière $13_1$, $13_2$ seront combinés.

Le dispositif de mesure avec fibre optique fluorescente et convertisseur n'est pratiquement pas affecté par le rayonnement ionisant R2 non absorbé. Il n'en est peut être pas de même pour celui avec fibre optique scintillatrice qui risque de présenter des pertes de transmission sous irradiation.

On peut avoir une idée de la sensibilité d'un tel dispositif de mesure d'exposition à fibre optique fluorescente grâce aux valeurs suivantes délibérément pessimistes :

- Transmission du détecteur d'image et du système d'éclairage : ≈ 10 % du rayonnement ionisant R1 incident.
- Absorption et efficacité de conversion de l'énergie reçue par le convertisseur :≈ 3 %.
- Efficacité de collection et d'absorption de lumière verte par la fibre optique 21, cette lumière provenant du convertisseur : ≈10%.
- Fraction de la lumière collectée dans l'ouverture numérique de la fibre optique : ≈ 5,5 % de chaque côté.
- Transmission entre la fibre optique et le détecteur de lumière : ≈ 30%.

- Rendement quantique du détecteur de lumière (par exemple une photodiode) : ≈ 40 %.
- Surface active de la fibre optique de diamètre 1 mm et de longueur 500 mm : ≈ 500 $mm^2$.
- Energie correspondante à une dose de rayonnement X absorbée de 1 μGray (soit 30 000 photons X de 50 KeV par $mm^2$) : $1,5 \times 10^9$ $eV/_{mm}2$.
- Energie des photons verts : 2,25 eVolts.
- Nombre d'électrons délivré par le détecteur de lumière pour une dose de 1μ Gray :

$$\frac{1,5 \times 10^9 \times 0,1 \times 0,03 \times 0,1 \times 0,055 \times 0,3 \times 0,4 \times 500}{2,25} \approx 6 \times 10^6$$

- Charge d'un électron : $1,6 \times 10^{-19}$ C.
- Charge délivrée pour une dose minimum de 200 nGray :

$$6 \times 10^6 \times 2 \times 10^{-7} \times 1,6 \times 10^{-19} \times 10^6 \approx 0,2 \text{ pC}$$

Cette charge est tout à fait mesurable dans de bonnes conditions avec un dispositif de détection de lumière 13. On peut éventuellement avoir recours à amplificateur de charge pour amplifier le signal produit. Une durée d'exposition d'une fraction de seconde est suffisante. Le fait de placer le dispositif de mesure de l'exposition 10 à l'arrière du détecteur d'image 1 ne perturbe en rien la qualité de l'image.

En revanche, on affecte de préférence le signal produit par le dispositif de détection de lumière 13 d'un coefficient d'étalonnage fonction de la tension du générateur de rayonnement ionisant R1 incident car l'absorption du détecteur d'image 1 à l'état solide dépend du spectre du rayonnement ionisant R1 incident.

Un tel dispositif de mesure d'exposition est peu encombrant surtout en épaisseur, simple à réaliser à bas coût et sans résolution spatiale. En en plaçant plusieurs dans des régions jugées typiques de l'image attendue, on peut utiliser au mieux la dynamique du détecteur d'image.

Le dispositif de mesure d'exposition selon l'invention n'est pas limité aux exemples décrits, les caractéristiques présentées sur les différentes figures peuvent bien entendu être combinées entre elles différemment.

**Revendications**

1. Détecteur d'image (1) à l'état solide destiné à détecter l'image d'un corps (20), comportant une pluralité d'éléments sensibles (17), une première face (1a) exposée à un rayonnement ionisant (1) incident représentatif de l'image, une deuxième face (1 b) opposée à la première et laissant passer un rayonnement ionisant (R2) non absorbé, **caracté-**

**risé en ce qu'**il est équipé d'au moins un dispositif de mesure de l'exposition du détecteur d'image (1) placé à proximité de l'autre face (1b) du détecteur d'image et destiné à être exposé au rayonnement (R2) ionisant non absorbé, comportant un dispositif de détection (13) apte à produire un signal représentatif de l'exposition du détection d'image (1) et au moins une fibre optique (11) apte à recevoir par sa face latérale un rayonnement, à effectuer une conversion en longueur d'onde du rayonnement reçu et à émettre un premier rayonnement visible ou proche du visible représentatif du rayonnement ionisant non absorbé (R2) vers le dispositif de détection (13).

2. Détecteur d'image selon la revendication 1, **caractérisé en ce que** la fibre optique est scintillatrice, le rayonnement qu'elle reçoit étant le rayonnement ionisant non absorbé (R2) et elle le convertit en le premier rayonnement visible ou proche du visible.

3. Détecteur d'image selon la revendication 1, **caractérisé en ce que** il comporte un convertisseur (22), coopérant avec la fibre optique et soumis au rayonnement ionisant non absorbé (R2) et **en ce que** la fibre optique est fluorescente, le rayonnement qu'elle reçoit étant un second rayonnement visible ou proche du visible et elle le convertit en le premier rayonnement visible ou proche du visible, ce second rayonnement visible ou proche du visible étant issu du convertisseur (22).

4. Détecteur d'image selon la revendication 3, **caractérisé en ce que** le convertisseur (22) comporte au moins un écran (220) scintillateur.

5. Détecteur d'image selon la revendication 4, **caractérisé en ce que** l'écran (220) scintillateur est placé entre le détecteur d'image (1) et la fibre optique (21).

6. Détecteur d'image selon la revendication 4, **caractérisé en ce que** l'écran scintillateur (220) est à l'opposé du détecteur d'image (1) par rapport à la fibre optique (21).

7. Détecteur d'image selon l'une des revendications 3 ou 4, **caractérisé en ce que** le convertisseur (22) comporte de la poudre (25) agglomérée d'un matériau scintillateur qui gaine la fibre optique (21).

8. Détecteur d'image selon l'une des revendications 3 ou 4, **caractérisé en ce que** le convertisseur (22) comporte un vernis (26) chargé en matériau scintillateur qui enrobe la fibre optique (21).

9. Détecteur d'image selon l'une des revendications 1 à 8, **caractérisé en ce qu'**une des extrémités (12) de la fibre optique (11) est couplée au dispositif de détection (13).

10. Détecteur d'image selon la revendication 9, **caractérisé en ce que** l'autre extrémité (14) de la fibre optique (11) est réfléchissante.

11. Détecteur d'image selon l'une des revendications 1 à 8, **caractérisé en ce que** les deux extrémités (18, 19) de la fibre optique (11) sont couplées au dispositif de détection (13).

12. Détecteur d'image selon la revendication 11, **caractérisé en ce que** le dispositif de détection (13) comporte un seul détecteur ($13_1$) fournissant le signal représentatif de l'exposition, ce détecteur ($13_1$) étant éclairé par au moins une des extrémités (12, 14) de la fibre optique (11).

13. Détecteur d'image selon la revendication 11, **caractérisé en ce que** le dispositif de détection comporte deux détecteurs ($13_1$, $13_2$) chacun étant éclairé par une extrémité (18, 19) de la fibre optique (21) et fournissant un signal, les deux signaux étant combinés pour donner le signal représentatif de l'exposition.

14. Détecteur d'image selon l'une des revendications 2 à 13, **caractérisé en ce que** le détecteur d'image étant à l'état solide photosensible avec un système d'éclairage (15) de remise à zéro, du côté de son autre face (1b), le système d'éclairage (15) est situé entre la fibre optique (11) scintillatrice et le détecteur d'image (1).

15. Détecteur d'image selon l'une des revendications 2 à 13, **caractérisé en ce que** le détecteur d'image à l'état solide photosensible avec un système d'éclairage (15) de remise à zéro, du côté de son autre face (1 b), le système d'éclairage (15) est situé à l'opposé du détecteur d'image (1) par rapport à la fibre optique (11) scintillatrice.

16. Détecteur d'image selon l'une des revendications 3 à 13, **caractérisé en ce que** le détecteur d'image étant à l'état solide photosensible avec un système d'éclairage (15) de remise à zéro, du côté de son autre face (1b), le système d'éclairage (15) est placé entre la fibre optique (21) fluorescente et le détecteur d'image (1).

17. Détecteur d'image selon l'une des revendications 1 à 16, **caractérisé en ce que** la fibre optique (11) suit un motif approprié de manière à occuper une surface significative face au détecteur d'image (1).

18. Détecteur d'image selon la revendication 17, **caractérisé en ce que** la fibre optique (11) est enroulée en colimaçon.

19. Détecteur d'image selon la revendication 17, **caractérisé en ce que** la fibre optique (11) est en lacet.

## Patentansprüche

1. Festkörper-Bilddetektor (1), der dazu bestimmt ist, das Bild eines Körpers (20) zu erfassen, mit mehreren empfindlichen Elementen (17), mit einer ersten Seite (1a), die einer einfallenden ionisierenden Strahlung (R1) ausgesetzt ist, die für das Bild repräsentativ ist, mit einer zweiten, der ersten entgegengesetzten Seite (1b), die eine nicht absorbierte ionisierende Strahlung (R2) durchlässt, **dadurch gekennzeichnet, dass** er mit mindestens einer Vorrichtung zur Messung der Belichtung des Bilddetektors (1) ausgestattet ist, die in der Nähe der anderen Seite (1b) des Bilddetektors angeordnet und dazu bestimmt ist, der nicht absorbierten ionisierenden Strahlung (R2) ausgesetzt zu werden, mit einer Erfassungsvorrichtung (13), die in der Lage ist, ein Signal zu erzeugen, das für die Belichtung des Bilddetektors (1) repräsentativ ist, und mit mindestens einer Lichtleitfaser (11), die in der Lage ist, über ihre Seitenfläche eine Strahlung zu empfangen, eine Wellenlängenumwandlung der empfangenen Strahlung durchzuführen und eine erste sichtbare oder nahe sichtbare Strahlung, die für die nicht absorbierte ionisierende Strahlung (R2) repräsentativ ist, zur Erfassungsvorrichtung (13) zu senden.

2. Bilddetektor nach Anspruch 1, **dadurch gekennzeichnet, dass** die Lichtleitfaser szihtillierend ist, wobei die Strahlung, die sie empfängt, die nicht absorbierte ionisierende Strahlung (R2) ist, und sie diese in die erste sichtbare oder nahe sichtbare Strahlung umwandelt.

3. Bilddetektor nach Anspruch 1, **dadurch gekennzeichnet, dass** er einen Wandler (22) aufweist, der mit der Lichtleitfaser zusammenwirkt und der nicht absorbierten ionisierenden Strahlung (R2) ausgesetzt ist, und dass die Lichtleitfaser fluoreszierend ist, wobei die Strahlung, die sie empfängt, eine zweite sichtbare oder nahe sichtbare Strahlung ist, und sie diese in die erste sichtbare oder nahe sichtbare Strahlung umwandelt, wobei diese zweite sichtbare oder nahe sichtbare Strahlung vom Wandler (22) kommt.

4. Bilddetektor nach Anspruch 3, **dadurch gekennzeichnet, dass** der Wandler (22) mindestens einen Szintillationsschirm (220) aufweist.

5. Bilddetektor nach Anspruch 4, **dadurch gekenn-**

**zeichnet, dass** der Szintillationsschirm (220) zwischen dem Bilddetektor (1) und der Lichtleitfaser (21) angeordnet ist.

6. Bilddetektor nach Anspruch 4, **dadurch gekennzeichnet, dass** der Szintillationsschirm (220) bezüglich der Lichtleitfaser (21) entgegengesetzt zum Bilddetektor (1) liegt.

7. Bilddetektor nach einem der Ansprüche 3 oder 4, **dadurch gekennzeichnet, dass** der Wandler (22) zusammengebackenes Pulver (25) aus einem szintillierenden Material aufweist, das die Lichtleitfaser (21) umhüllt.

8. Bilddetektor nach einem der Ansprüche 3 oder 4, **dadurch gekennzeichnet, dass** der Wandler (22) einen mit szintillierendem Material geladenen Lack (26) enthält, der die Lichtleitfaser (21) umhüllt.

9. Bilddetektor nach einem der Ansprüche 1 bis 8, **dadurch gekennzeichnet, dass** eines der Enden (12) der Lichtleitfaser (11) mit der Erfassungsvorrichtung (13) gekoppelt ist.

10. Bilddetektor nach Anspruch 9, **dadurch gekennzeichnet, dass** das andere Ende (14) der Lichtleitfaser (11) reflektierend ist.

11. Bilddetektor nach einem der Ansprüche 1 bis 8, **dadurch gekennzeichnet, dass** die beiden Enden (18, 19) der Lichtleitfaser (11) mit der Erfassungsvorrichtung (13) gekoppelt sind.

12. Bilddetektor nach Anspruch 11, **dadurch gekennzeichnet, dass** die Erfassungsvorrichtung (13) einen einzigen Detektor ($13_1$) aufweist, der das für die Belichtung repräsentative Signal liefert, wobei dieser Detektor ($13_1$) von mindestens einem der Enden (12, 14) der Lichtleitfaser (11) beleuchtet wird.

13. Bilddetektor nach Anspruch 11, **dadurch gekennzeichnet, dass** die Erfassungsvorrichtung zwei Detektoren ($13_1$, $13_2$) aufweist, die je von einem Ende (18, 19) der Lichtleitfaser (21) beleuchtet werden und ein Signal liefern, wobei die beiden Signale kombiniert werden, um das für die Belichtung repräsentative Signal zu ergeben.

14. Bilddetektor nach einem der Ansprüche 2 bis 13, **dadurch gekennzeichnet, dass** der Bilddetektor ein lichtempfindlicher Festkörper-Bilddetektor mit einem Nullrücksetzungs-Beleuchtungssystem (15) auf seiner anderen Seite (1b) ist, wobei das Beleuchtungssystem (15) sich zwischen der szintillierenden Lichtleitfaser (11) und dem Bilddetektor (1) befindet.

**15.** Bilddetektor nach einem der Ansprüche 2 bis 13, **dadurch gekennzeichnet, dass** der Bilddetektor ein lichtempfindlicher Festkörper-Bilddetektor mit einem Nullrücksetzungs-Beleuchtungssystem (15) auf seiner anderen Seite (1b) ist, wobei das Beleuchtungssystem (15) sich bezüglich der szintillierenden Lichtleitfaser (11) entgegengesetzt zum Bilddetektor (1) befindet.

**16.** Bilddetektor nach einem der Ansprüche 3 bis 13, **dadurch gekennzeichnet, dass** der Bilddetektor ein lichtempfindlicher Festkörper-Bilddetektor mit einem Nullrücksetzungs-Beleuchtungssystem (15) auf seiner anderen Seite (1b) ist, wobei das Beleuchtungssystem (15) sich zwischen der fluoreszierenden Lichtleitfaser (21) und dem Bilddetektor (1) befindet.

**17.** Bilddetektor nach einem der Ansprüche 1 bis 16, **dadurch gekennzeichnet, dass** die Lichtleitfaser (11) einem geeigneten Muster folgt, um eine signifikante Fläche gegenüber dem Bilddetektor (1) einzunehmen.

**18.** Bilddetektor nach Anspruch 17, **dadurch gekennzeichnet, dass** die Lichtleitfaser (11) wendelförmig aufgerollt ist.

**19.** Bilddetektor nach Anspruch 17, **dadurch gekennzeichnet, dass** die Lichtleitfaser (11) serpentinenartig ist.

**Claims**

**1.** Solid-state image detector (1) intended for detecting the image of a body (20), comprising a plurality of sensitive elements (17), a first face (la) exposed to incident ionising radiation (R1) representative of the image, a second face (1b) opposite the first and letting unabsorbed ionising radiation (R2) pass through it, **characterized in that** it is equipped with at least one device for measuring exposure of the image detector (1) placed near the other face (1b) of the image detector and intended to be exposed to the unabsorbed ionising radiation (R2), comprising a detection device (13) capable of producing a signal representative of the exposure of the image detector (1) and at least one optical fibre (11) capable of receiving radiation via its lateral face, of carrying out a wavelength conversion of the received radiation and of emitting first visible or near-visible radiation representative of the unabsorbed ionising radiation (R2) towards the detection device (13).

**2.** Image detector according to Claim 1, **characterized in that** the optical fibre is a scintillating optical fibre, the radiation that it receives being the unabsorbed ionizing radiation (R2), and it converts this radiation into the first visible or near-visible radiation.

**3.** Image detector according to Claim 1, **characterized in that** it includes a converter (22) that co-operates with the optical fibre and is subjected to the unabsorbed ionising radiation (R2) and **in that** the optical fibre is a fluorescent optical fibre, the radiation that it receives being second visible or near-visible radiation, and said fluorescent optical fibre converts it into the first visible or near-visible radiation, this second visible or near-visible radiation emanating from the converter (22).

**4.** Image detector according to Claim 3, **characterized in that** the converter (22) includes at least one scintillator screen (220).

**5.** Image detector according to Claim 4, **characterized in that** the scintillator screen (220) is placed between the image detector (1) and the optical fibre (21).

**6.** Image detector according to Claim 4, **characterized in that** the scintillator screen (220) is opposite the image detector (1) with respect to the optical fibre (21).

**7.** Image detector according to one of Claims 3 and 4, **characterized in that** the converter (22) includes agglomerated powder (25) of a scintillating material which sheaths the optical fibre (21).

**8.** Image detector according to one of Claims 3 and 4, **characterized in that** the converter (22) includes a varnish (26) loaded with scintillating material which coats the optical fibre (21).

**9.** Image detector according to one of Claims 1 to 8, **characterized in that** one of the ends (12) of the optical fibre (11) is coupled to the detection device (13).

**10.** Image detector according to Claim 9, **characterized in that** the other end (14) of the optical fibre (11) is reflecting.

**11.** Image detector according to one of Claims 1 to 8, **characterized in that** the two ends (18, 19) of the optical fibre (11) are coupled to the detection device (13).

**12.** Image detector according to Claim 11, **characterized in that** the detection device (13) includes a single detector $(13_1)$ supplying the signal representative of the exposure, this detector $(13_1)$ being illuminated by at least one of the ends (12, 14) of the optical fibre (11).

13. Image detector according to Claim 11, **characterized in that** the detection device includes two detectors ($13_1$, $13_2$), each being illuminated by one end (18, 19) of the optical fibre (21) and supplying a signal, the two signals being combined to give the signal representative of the exposure.

14. Image detector according to one of Claims 12 to 13, **characterized in that**, since the image detector is a photosensitive solid-state image detector with a zero-reset illumination system (15), on the same side as its other face (1b), the illumination system (15) is situated between the scintillating optical fibre (11) and the image detector (1).

15. Image detector according to one of Claims 12 to 13, **characterized in that**, since the image detector is a photosensitive solid-state image detector with a zero-reset illumination system (15), on the same side as its other face (1b), the illumination system (15) is situated opposite the image detector (1) with respect to the scintillating optical fibre (11).

16. Image detector according to one of Claims 3 to 13, **characterized in that**, since the image detector is a photosensitive solid-state image detector with a zero-reset illumination system (15), on the same side as its other face (1b), the illumination system (15) is placed between the fluorescent optical fibre (21) and the image detector (1).

17. Image detector according to one of Claims 1 to 16, **characterized in that** the optical fibre (11) follows an appropriate pattern so as to occupy a significant surface area facing the image detector (1).

18. Image detector according to Claim 17, **characterized in that** the optical fibre (11) is wound into a spiral.

19. Image detector according to Claim 17, **characterized in that** the optical fibre (11) is in a series of bends.

FIG.1a

FIG.1b

FIG.1c

EP 0 983 521 B1

FIG.2a

FIG.2b

EP 0 983 521 B1

FIG.2c

FIG.2d